Europäisches Patentamt

European Patent Office

Office européen des brevets

(19)

(11) **EP 0 475 759 B1**

(12) EUROPEAN PATENT SPECIFICATION

(45) Date of publication and mention
of the grant of the patent:
**07.01.1998 Bulletin 1998/02**

(51) Int Cl.6: **G10L 5/06**, G10L 7/08

(21) Application number: **91308334.1**

(22) Date of filing: **12.09.1991**

(54) **Phoneme discrimination method**

Methode zur Phonemunterscheidung

Procédé de discrimination de phonèmes

(84) Designated Contracting States:
**DE FR GB**

(30) Priority: **13.09.1990 JP 242897/90**
**13.09.1990 JP 242898/90**

(43) Date of publication of application:
**18.03.1992 Bulletin 1992/12**

(73) Proprietor: **Oki Electric Industry Co., Ltd.**
**Tokyo (JP)**

(72) Inventor: **Miki, Kei,**
**c/o Oki Electric Industry Co., Ltd.**
**Tokyo (JP)**

(74) Representative: **Read, Matthew Charles et al**
**Venner Shipley & Co.**
**20 Little Britain**
**London EC1A 7DH (GB)**

(56) References cited:
**US-A- 4 882 755**

- **ICASSP'90 (1990 INTERNATIONAL CONFERENCE ON ACOUSTICS, SPEECH, AND SIGNAL PROCESSING, Albuquerque, New Mexico, 3rd - 6th April 1990), vol. 2, pages 789-792, IEEE, New York, US; S. FURUI: "On the use of hierarchical spectral dynamics in speech recognition"**
- **REVIEW OF THE ELECTRICAL COMMUNICATIONS LABORATORIES, vol. 34, no. 3, May 1986, pages 343-348, Tokyo, JP; K. AIKAWA et al.: "Spoken word recognition using**
- **spectrum and power"**
- **IEEE TRANSACTIONS ON ACOUSTICS, SPEECH AND SIGNAL PROCESSING, vol. ASSP-33, no. 4, August 1985, pages 837-849, New York, US; D.K. BURTON et al.: "Isolated-word speech recognition using multisection vector quantization codebooks"**

**Description**

The present invention relates to phoneme discrimination methods comprising the steps of analysing frames of an input voice signal to produce vectors representing the spectrum and power of the voice signal during each frame, generating a power-change vector, representing a change in voice signal power with time, from the voice signal powers of a predetermined number of successive frames, vector quantizing the power-change vector using an empirically determined power-change vector codebook to produce a power-change vector quantization code, and outputting a signal representing a phoneme on the basis of the power-change vector quantization code. The present invention also relates to apparatus for performing such methods.

As one of the methods studied most extensively these days in the field of voice recognition, there is the phoneme recognition method. The term "phoneme recognition" means conversion of an input voice signal to a series of phonemes which are substantially equal to pronunciation symbols. The voice signal converted to such a series of phonemes is then converted, for example, to a letter string (i.e. sentence), which appears most suitable by using a word dictionary, grammatical rules and the like.

A merit available from the practice of phoneme discrimination resider in that expansion of the vocabularies, expansion of recognizable sentence types, etc. can be achieved as desired by separating acoustic level processing and letter string level processing from each other.

A method of phoneme discrimination is proposed in "Multi-Level Clustering of Acoustic Features for Phoneme Recognition Based on Mutual Information", Proc. ICASSP-89, pp 604-607 (May 1989).

An outline of the conventional phoneme discrimination method disclosed in the above publication will be described next.

According to the phoneme discrimination method, the powers of individual frames and acoustic parameters (LPC Mel-cepstrum coefficients) by an LPC analysis are obtained from input voice signals. Subsequent to computation of four quantization codes to be described below, the phoneme label (the train of phonemes symbols) of each frame is determined from the combination of these quantization codes.

(1) With respect to each frame, a power-change vector (PCP) created by differences between the power of the frame of interest and its preceding and succeeding frames is vector quantized, whereby a power change vector code, indicative of the power change vectors of the voice waveform is obtained.

(2) As acoustic parameters, cepstrum codes are obtained by vector quantizing the LPC Mel-cepstrum coefficients while using codebooks classified in advance in accordance with power codes.

(3) The gradient of a least square approximation line of the acoustic parameters is vector quantized to determine a regression coefficient.

(4) The time-series pattern of the power codes is vector quantized to obtain a power code sequence.

To achieve a high level of phoneme discrimination, it is necessary to effectively analyze parameters which serve as various keys of a voice. When a person comprehends a voice, it has been proven through various experiments that the intensity variations of the voice and the time variance of its spectrum - dynamic information about the voice - become important keys, to say nothing of static information about the voice, namely, the intensity of the voice at a given moment and the tonal features (spectrum of the voice). Although, the above-described conventional phoneme discrimination method o analyzes power variations, one of the key parameters in phoneme discrimination, in the form of a characteristic power change vector (PCP) and also takes into consideration the static information on the spectrum by relying upon acoustic parameters (LPC Mel-cepstrum coefficients), nothing has been taken into consideration in connection with variations of the voice spectrum, these variations being the most important key parameter for discrimination between similar phonemes. Namely, the conventional phoneme discrimination method involves the problem that its phoneme discriminating ability is insufficient because it relies upon indirect evaluation by a power code sequence or the like or upon approximate evaluation by the gradient of the least squares approximation line of the acoustic parameters.

When a person comprehends a voice, he clusters the voice quality through a series of utterances in addition to a judgement based on static information about the voice. The series of utterances includes a particular spectrum structure defined by the voice quality inherent to the speaker, so that the spectrum structure differs when uttered by a different speaker. A speaker-independent voice recognition system is therefore required to precisely analyze this spectrum structure. However, this aspect has not been taken into consideration at all. Namely, there is only one codebook to analyze the features of individual spectra, so that coding of all voices is conducted using the single codebook. This has resulted in frequent allotment of a group of codes of a combination which shall by no means take place basically when uttered by a single speaker, leading to one cause for the unsuccessful improvement in the recognition performance.

Further information regarding prior art speech recogition systems may be obtained from US-A-4 882 755 and S. Furui, "On the use of hierarchical spectral dynamics in speech recognition", ICASSP April 1990.

An aim of the present invention is to provide a phoneme discrimination method improved in the ability to discriminate phonemes by taking into direct consideration the variations of each voice spectrum, these variations being the most important key parameter for discrimination between similar phonemes. Further, another aim of the present invention is to provide a phoneme discrimination method, which can achieve a high level of phoneme discrimination performance in a speaker-independent voice recognition system, by precisely estimating the spectrum structure being defined by the voice quality inherent to the speaker.

A method according to a first aspect of the present invention is characterized by the steps of generating a spectrum-change vector, representing a change in voice signal spectrum with time, from the voice signal spectra of a predetermined number of successive frames; and vector quantizing the spectrum-change vector, using a codebook selected in dependence on the power-change vector quantization code, to produce a spectrum-change vector quantization code, and in that the outputting of a signal representing a phoneme is carried out on the further basis of the spectrum-change vector quantization code.

A method, according to the first aspect of the present invention, analyzes variations in voice power in the form of a power-change vector as dynamic information on the voice, to say nothing of static information on the voice, namely, the difference in voice power or spectrum at a given moment. Further, after rough clustering by such a power-change vector, detailed clustering is conducted using the spectrum-change vector so that the voice is recognised according to a hierarchical process. This has made it possible to achieve more efficient and higher discrimination performance than discrete use of individual features.

A method according to a second aspect of the present invention, is characterized by the step of vector quantizing the spectrum vector for a frame, using a plurality of spectrum vector codebooks selected in dependence on the power-change vector quantization code, to produce a plurality of spectrum 30 vector quantization codes and a plurality of quantization error values, and in that the signal representing a phoneme is output on the further basis of the spectrum vector quantization code produced according to an optimum codebook, the optimum codebook being the spectrum vector codebook for which the sum over time of quantization error values is least.

In a method according to the second aspect of the present invention, plural spectrum codebooks, clustered beforehand in accordance the voice structures, are provided and, by comparing the input voice with each of the codebooks, detailed discrimination and voice structure judgement are conducted. It is therefore possible to perform recognition for a voice of any structure while precisely analysing its spectrum structure. According to this method, instead of providing plural codebooks for all features, a single codebook is used for pattern features of lower speaker dependency but plural codebooks are employed for spectrum features having high speaker dependency. By providing a suitable number of codebooks in accordance with the speaker dependency of each feature, it is possible not only to reduce the amount of the data to be processed but also to perform more stable, precise clustering owing to the omission of processing for unnecessary dictionary items, thereby making it possible to provide efficient and high-level phoneme discrimination performance.

The present invention also provides apparatuses for performing the methods of the present invention. The apparatuses comprise means for performing each of the steps of one or other of the methods.

Embodiments of the present invention will now be described, by way of example, with reference to the accompanying drawings, in which:

FIG. 1 is a block diagram showing the construction of a system of a first embodiment of the present invention;
FIG. 2 is a diagram illustrating one example of the power of input voice signals;
FIG. 3 is a diagram depicting one example of the power-change of an input voice signal;
FIG. 4 is a diagram showing one example of the time variation of a frequency spectrum;
FIG. 5 is a diagram showing one example of a spectrum-change obtained when a frequency spectrum is binary-quantized;
FIG. 6 is a diagram illustrating one example of a power-change vector codebook;
FIG. 7 is a diagram showing one example of a spectrum-change pattern codebook;
FIG 8 is a diagram showing one example of a phoneme table for use in the first embodiment;
FIG. 9 is a block diagram showing the construction of a system of a second embodiment of the present invention;
FIG. 10 is a diagram illustrating one example of the frequency spectrum of an input voice signal;
FIG. 11 is a diagram showing one example of spectrum data;
FIG. 12 is a diagram showing one example of a spectrum codebook; and
FIG. 13 is a diagram depicting one example of a phoneme table for use in the second embodiment.

<u>Example 1</u>

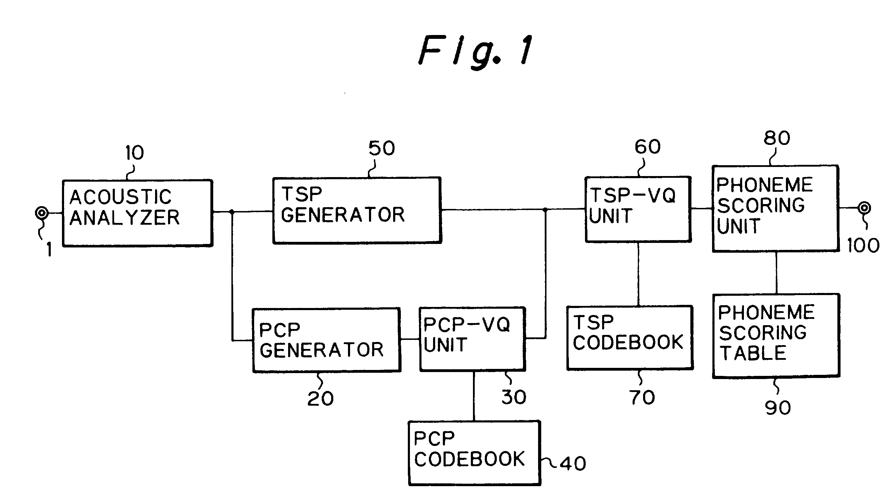

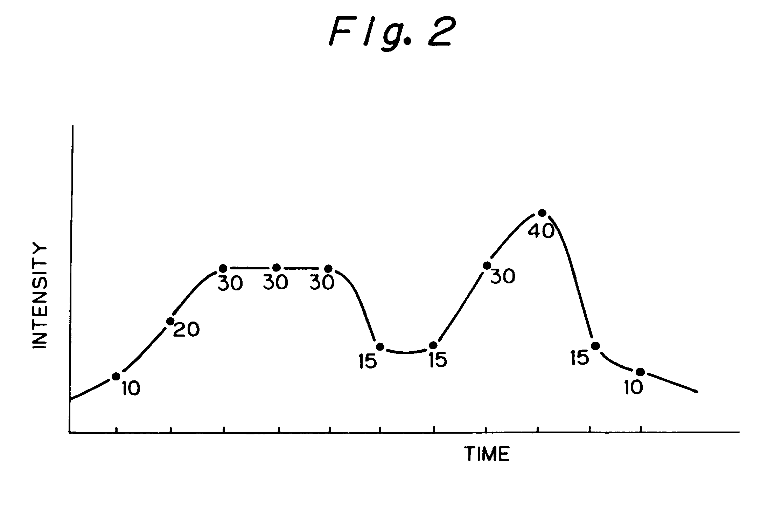

The first embodiment of this invention will be described with reference to FIG.1 to FIG. 8.

FIG. 1 is the block diagram showing the construction of the system useful in the practice of the first phoneme discrimination method.

In FIG. 1, the spectrum of a voice sensed by an unillustrated microphone is computed at an acoustic analyzer 10 from voice signals input from a voice input terminal 1. Spectrum extraction may be performed using a method which makes use of a band of bandpass filters with successively higher centre frequencies, a method which uses spectrum analysis by FFT (Fast Fourier Transformation) or a similar method. The method using the bank of bandpass filters is employed in this embodiment.

Employed as a spectrum $S_i$ is that obtained by logarithmically converting band frequency components, which have been extracted by the bank of J bandpass filters with different centre frequencies, and sampling them at short intervals called "frames". The spectrum $S_i$ can be expressed in vector form as follows:

$$S_i = (S_{i1}, S_{i2}, ..., S_{ij}, ..., S_{iJ-1}, S_{iJ}) \tag{1}$$

where i is the frame number and j is the number of the bandpass filter. In the following description, the start frame number of the voice signal will be set at 0 while the end frame number of the voice signal will be set at I.

At the acoustic analyzer 10, the voice power $P_i$ of each frame is also calculated in accordance with the following formula:

$$P_i = (\sum_{j=1}^{J} S_{ij})/J \tag{2}$$

At a PCP generator 20, a power-change vector (PCP) $P_i$ represented by the following formula (3) is computed by combining the (2n+1) voice powers of the i-th frame and the adjacent n frames preceding and succeeding the i-th frame, respectively:

$$P_i = (P_{i-n}, P_{i-n+1}, ..., P_{i-1}, P_i, ..., P_{i+n-1}, P_{i+n}) \tag{3}$$

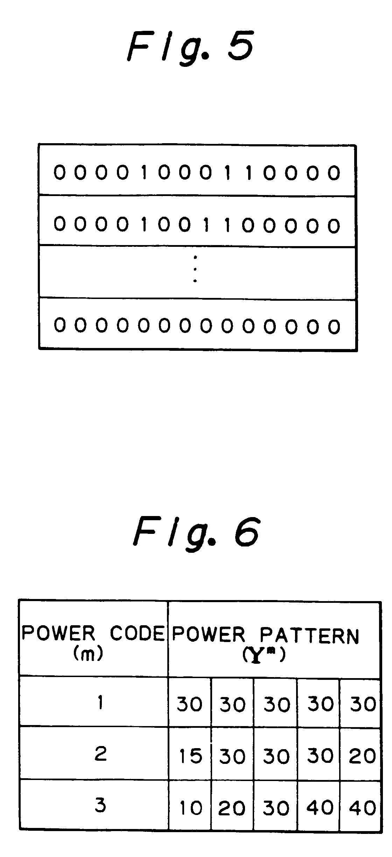

The PCP $P_i$ is vector-quantized at a PCP-VQ unit 30 with reference to a PCP codebook 40 as shown in FIG. 6 so that a power-change vector quantization code (PCP-VQ code) $C_i$ is obtained in accordance with the following formula:

$$C_i = \underset{m}{argmin}\ d(P_i, Y^m) \tag{4}$$

Here, $d(P_i, Y^m)$ indicates the distance between the PCP $P_i$ and the PCP $Y^m$ of

$$Y^m = (Y^m_{-n}, Y^m_{-n+1}, ..., Y^m_{-1}, Y^m_0, ..., Y^m_{n-1}, Y^m_n)$$

$$(m = 1, 2, ..., m) \tag{5}$$

the power code number m, and argmin means to determine the power code number which makes this distance shortest. M is the size of a PCP codebook. This power-change vector quantization (PCP-VQ) is for estimating the input voice from the form of the power-change vector.

At a TSP generator 50, a spectrum-change vector (TSP) represented by the following formula, is created by combining the (2k+1) spectra of the i-th frame, whose spectrum is $S_i$, and the adjacent k frames preceding and succeeding the i-th frame, respectively;

$$T_i = (S_{i-k}, ..., S_{i-1}, S_i, S_{i+1}, S_{i+k}) \tag{6}$$

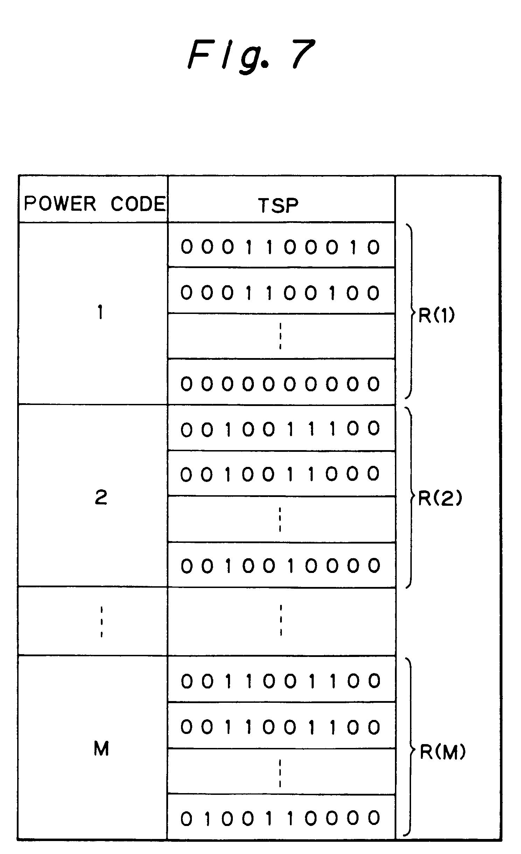

At a TSP-VQ unit 60, the TSP $T_i$ is vector-quantized based on TSP codebooks 70 as shown in FIG. 7. The TSP codebooks 70 consist of M codebooks stored in accordance with the power codes.

The spectrum-change vector quantization is for conducting detailed estimation based on accurate features of a voice signal and their variations in contrast to the rough estimation in the pattern quantization. Firstly, the TSP codebook corresponding to the power code $C_i$ is selected from the TSP codebooks 70. In other words, this is equivalent to a change-over to a dictionary suitable for detailed discrimination in view of the results of the rough estimation. Vector quantization is performed using the codebook so selected. Supposing that the power code be $C_i$, a spectrum-change vector quantization code $Z_i$ can be defined by the following formula:

$$Z_i = \underset{r}{argmin} \ d(T_i, U(C_i)^r) \tag{7}$$

where $U(C_i)^r$ corresponds to the power code $C_i$ and is a spectrum-change

$$U(C_i)^r = U(C_i)^{r_1}, U(C_i)^{r_2}, ..., U(C_i)^{(2k+1)J_1})$$

$$(r = 1, 2, ..., R(C_i)) \tag{8}$$

vector (TSP) consisting of $(2k+1)*J$ elements, r is a code number allotted to each spectrum-change vector (TSP), and $R(C_i)$ means the size of the TSP codebook corresponding to the power code $C_i$.

At a phoneme scoring unit 80, the power code $C_i$ and the spectrum-change VQ code $Z_i$ are converted to a phoneme symbol $L_i$. Although various methods may be used for this conversion, the simplest table look-up method will be described here.

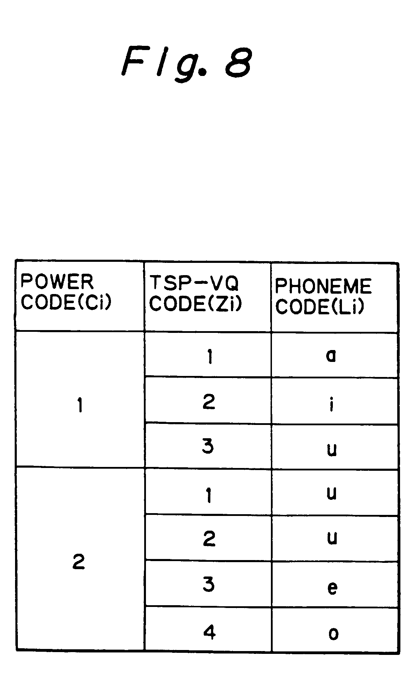

The construction of a phoneme scoring table 90 useful for the above conversion is illustrated in FIG. 8. For example, the phoneme symbol $L_i$ is "a" when $C_i=1$ and $Z_i=1$, and is "e" when $C_i=2$ and $Z_i=3$. In this manner, the input voice signal is converted into a train of phoneme symbols and is then output from an output terminal 100.

Various methods may be used for the preparation of the phoneme scoring table 90. One example will be described hereinafter.

(1) In advance, compute a power-change vector (PCP) and a spectrum-change vector (TSP) on the basis of a number of voice data sets and store them as power-change vector (PCP) data and spectrum-change vector (TSP) data.

(2) Cluster the PCP data to prepare a PCP codebook.

(3) Vector-quantize the PCP data by using the PCP codebook, thereby preparing power code data.

(4) Cluster TSP data corresponding to the frames allotted with the same power code number out of the PCP data, so that a spectrum-change vector (TSP) codebook is prepared. This processing is repeated as many times as there are power codes.

(5) Vector-quantize the TSP data using the TSP codebook, determined from the corresponding power code, thereby obtaining spectrum-change vector quantization code (TSP-VQ code) data.

(6) Prepare a phoneme table indicative of the correlation between phoneme code data, allotted beforehand, to hand-labelled voice data and the PCP-VQ code data and TSP-VQ data.

Example 2

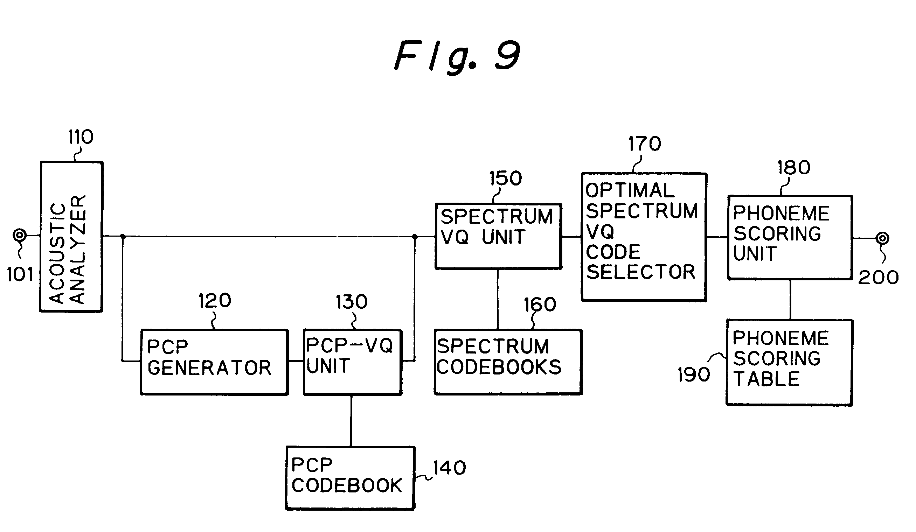

FIG. 9 is the block diagram showing the construction of the system useful in the practice of the second phoneme discrimination method of the present invention.

In the drawing, acoustic analyzer 110, PCP generator 120, PCP-VQ unit 130 and PCP codebook 140 are either the same as or similar to the acoustic analyzer 10, PCP generator 20, PCP-VQ unit 30 and PCP codebook 40 in Example 1 (FIG. 1) so that their description is omitted herein.

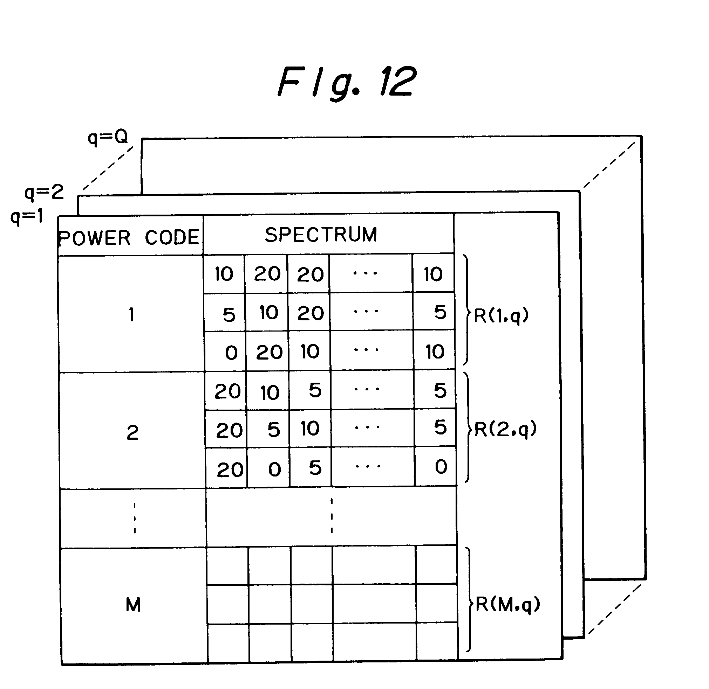

At a spectrum VQ unit 150 in this embodiment, vector quantization of spectrum $S_i$ [see Formula (1)] is performed based on spectrum codebooks 160 as illustrated in FIG. 12.

The spectrum codebooks 160 consist of Q types of codebook prepared from numerous examples of voice data and classified in advance into groups in terms of features of speakers' characteristics, namely, parameters such as sex, age, voice quality and the like. Further, each codebook comprises sub-codebooks, classified depending on power-change vector quantization codes (PCP-VQ codes). Namely, the spectrum codebooks 160 consist of Q codebooks which each comprise M sub-codebooks.

According to the spectrum VQ in this embodiment, Q sub-codebooks corresponding to a PCP-VQ code $C_i$ are selected and vector-quantization is carried out. The q-th sub-codebook, corresponding to the PCP-VQ code $C_i$, is referred to, and a spectrum VQ code $Z(q)_i$ and VQ error $V(q)_i$ represented by the following formulas, respectively, are computed:

$$Z(q)_i = \underset{r}{argmin}\ d(S_i, X(q, C_i)^r)\quad (q = 1, 2, ..., Q)\qquad (9)$$

$$V(q)_i = \underset{r}{min}\ d(S_i, X(q, C_i)^r)\quad (q = 1, 2, ..., Q)\qquad (10)$$

$$X(q, C_i)^r = (X(q, C_i)^{r_1}, X(q, C_i)^{r_2}, ..., X(q, C_i)^{r_J}$$

$$(r = 1, 2, ..., R(q, C_i))\qquad (11)$$

where $X(q,C_i)^r$ is the spectrum of the q-th sub-codebook corresponding to the PCP-VQ code $C_i$, r is a code number allotted to each spectrum, and $R(q,C_i)$ is the size of the sub-codebook corresponding to the PCl-VQ code $C_i$.

At an optimal spectrum VQ code selector 170, the sum $W_q$ of the VQ errors $V(q)_i$ from the start frame to the end frame of the voice signal is computed in accordance with the following formula (12), and the codebook number $q_m$ of the codebook which makes $W_q$ smallest is determined by the following formula (13):

$$q_m = \underset{q}{argmin}\, W_q\quad (q = 1, 2, ..., Q)\qquad (12)$$

$$W_q = \sum_{i=0}^{I} V(q)_i\quad (q = 1, 2, ..., Q)\qquad (13)$$

The code obtained upon quantization of the spectrum $S_i$ by the codebook corresponding to the number $q_m$ is an optimal spectrum VQ code $Z_i$. Namely, $Z_i$ is defined as follows:

$$Z_i = Z(q_m)_i\qquad (14)$$

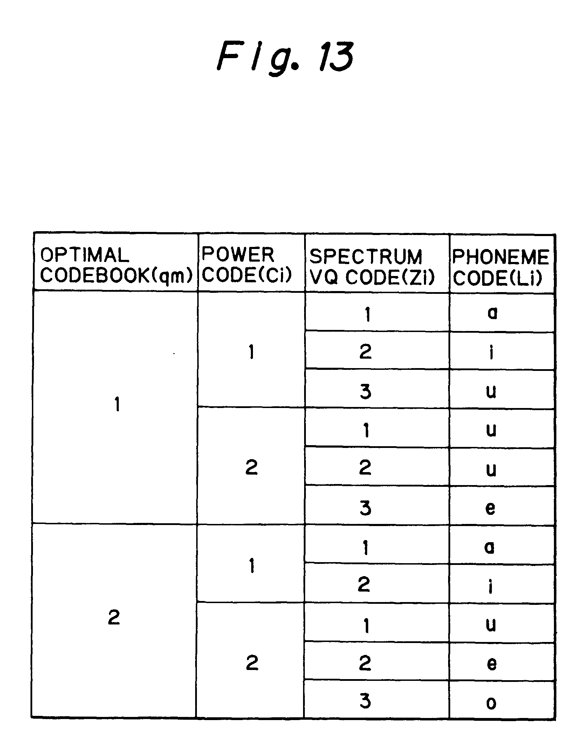

At a phoneme scoring unit 180, the PCP-VQ code $C_i$, optimal codebook number $q_m$ and optimal spectrum VQ code $Z_i$ are converted to a phoneme symbol $L_i$. This conversion is conducted by the table look-up method as in Example 1. FIG. 13 shows an exemplary phoneme scoring table 190, which defines, for each optimal codebook number, correlation between the power code and the optimal spectrum VQ code and phoneme symbol. Accordingly, the phoneme symbol $L_i$ is "a" when $q_m=1$, $C_i=1$ and $Z_i=1$ and "e" when $q_m=2$, $C_i=2$ and $Z_i=2$. In this manner, the input voice signal is converted to a train of phoneme symbols and then output from an output terminal 200.

Various methods may be used for the preparation of the phoneme scoring table. One example will be described hereinafter.

(1) In advance, cluster voice data uttered by many speakers considering the speakers' characteristics, sexes, ages and voice qualities into several groups and allot a speaker group code to the voice data groups.

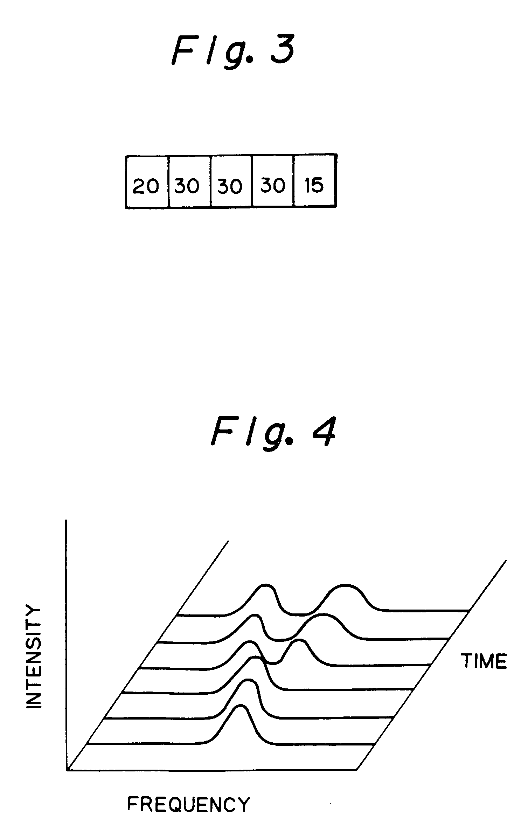

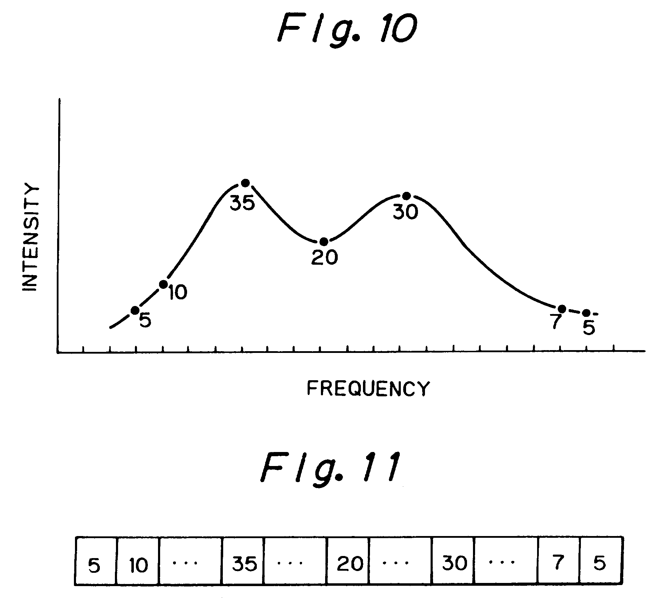

(2) Compute power-change vectors (PCPs) and spectra for the voice data and store them as PCP data (see FIG. 3) and spectrum data (see FIG. 11), respectively.

(3) Cluster the PCP data to prepare PCP codebooks

(4) Vector-quantize the PCP data by using the PCP codebook, thereby preparing power code data.

(5) Classify the spectrum data in accordance with the speaker group code into grouped spectrum data.

(6) Classify the individual grouped spectrum data in accordance with the power codes, whereby the grouped spectrum data are clustered to prepare sub-codebooks. It is the spectrum codebooks 150 (see FIG. 12) that these sub-codebooks are put together.

(7) Vector-quantize the grouped spectrum data by using the sub-codebooks determined from the corresponding power code, thereby obtaining spectrum VQ code data.

(8) Prepare, for each of the group numbers, a phoneme table 190 indicative of correlation among the individual codes from phoneme code data allotted beforehand to the hand-labelled voice data, the spectrum VQ code data and the power codes.

It is to be noted that the present invention is not limited to the above embodiments but various modifications are feasible based on the subject matter of the present invention, as claimed.

## Claims

1. A phoneme discrimination method comprising the steps of:

   analysing frames of an input voice signal to produce vectors representing the spectrum and power of the voice signal during each frame;
   generating a power-change vector (PCP), representing a change in voice signal power with time, from the voice signal powers of a predetermined number of successive frames;
   vector quantizing the power-change vector using an empirically determined power-change vector codebook to produce a power-change vector quantization code (PCP-VQ); and
   outputting a signal representing a phoneme on the basis of the power-change vector quantization code,

   **characterized by** the steps of:

   generating a spectrum-change vector (TSP), representing a change in voice signal spectrum with time, from the voice signal spectra of a predetermined number of successive frames; and
   vector quantizing the spectrum-change vector, using a codebook (70) selected in dependence on the power-change vector quantization code, to produce a spectrum-change vector quantization code (TSP-VQ),

   **and in that**
   the outputting of a signal representing a phoneme is carried out on the further basis of the spectrum-change vector quantization code.

2. A phoneme discrimination apparatus comprising:

   means (10) for analysing frames of an input voice signal to produce vectors representing the spectrum and power of the voice signal during each frame;

means (20) for generating a power-change vector (PCP), representing a change in voice signal power with time, from the voice signal powers of a predetermined number of successive frames;

means (30) for vector quantizing the power-change vector using an empirically determined power-change vector codebook (40) to produce a power-change vector quantization code (PCP-VQ); and

means (80,90,100) for outputting a signal representing a phoneme on the basis of the power-change vector quantization code,

**characterized by**

means (50) for generating a spectrum-change vector, representing a change in voice signal spectrum with time, from the voice signal spectra of a predetermined number of successive frames; and

means (60) for vector quantizing the spectrum-change vector, using a codebook (70) selected in dependence on the power-change vector quantization code, to produce a spectrum-change vector quantization code (TSP-VQ),

**and in that**

the means for outputting a signal representing a phoneme is further responsive to the spectrum-change vector quantization code.

3. A phoneme discrimination method comprising the steps of:

analysing frames of an input voice signal to produce vectors representing the spectrum and power of the voice signal during each frame;

generating a power-change vector (PCP), representing a change in voice signal power with time, from the voice signal powers of a predetermined number of successive frames;

vector quantizing the power-change vector using an empirically determined power-change vector codebook to produce a power-change vector quantization code (PCP-VQ); and

outputting a signal representing a phoneme is on the basis of the power-change vector quantization code,

**characterized by** the step of:

vector quantizing the spectrum vector for a frame, using a plurality of spectrum vector codebooks (160) selected in dependence on the power-change vector quantization code, to produce a plurality of spectrum vector quantization codes and a plurality of quantization error values,

**and in that** the signal representing a phoneme is output on the further basis of the spectrum vector quantization code produced according to an optimum codebook,

the optimum codebook being the spectrum vector codebook for which the sum over time of quantization error values is least.

4. A phoneme discrimination apparatus comprising:

means (110) for analysing frames of an input voice signal to produce vectors representing the spectrum and power of the voice signal during each frame;

means (120) for generating a power-change vector (PCP), representing a change in voice signal power with time, from the voice signal powers of a predetermined number of successive frames;

means (130) for vector quantizing the power-change vector using an empirically determined power-change vector codebook (140) to produce a power-change vector quantization code (PCP-VQ); and

means (180,190,200) for outputting a signal representing a phoneme on the basis of the power-change vector quantization code;

**characterized by**

means (150) for vector quantizing the spectrum vector for a frame, using a plurality of spectrum vector codebooks (160) selected in dependence on the power-change vector quantization code, to produce a plurality of spectrum vector quantization codes and a plurality of quantization error values; and

means (180,190,200) for outputting a signal representing a phoneme on the further basis of the spectrum vector quantization code produced according to an optimum codebook,

the optimum codebook being the spectrum vector codebook identified by means (170) for determining for

EP 0 475 759 B1

which spectrum vector codebook the sum over time of quantization error values is least.

**Patentansprüche**

1. Phonem-Unterscheidungsverfahren, das folgende Schritte aufweist:

   Analysieren der Frames eines Eingangs-Sprachsignals, um Vektoren zu erzeugen, die das Spektrum und die Leistung des Sprachsignals während eines jeden Frames darstellen;
   Erzeugen eines Leistungsänderungsvektors (PCP), der eine Änderung in der Sprachsignal-Leistung mit der Zeit darstellt, aus den Sprachsignal-Leistungen einer vorbestimmten Anzahl von aufeinanderfolgenden Frames;
   Vektor-Quantisieren des Leistungsänderungsvektors unter Verwendung eines empirisch bestimmten Leistungsänderungsvektor-Codebuchs, um einen Leistungsänderungsvektor-Quantisierungscode (PCP-VQ) zu erzeugen; und
   Ausgeben eines Signals, das ein Phonem auf der Basis des Leistungsänderungsvektor-Quantisierungscodes darstellt,

   gekennzeichnet durch folgende Schritte:

   Erzeugen eines Spektrumsänderungsvektors (TSP), der eine Änderung im Sprachsignal-Spektrum mit der Zeit darstellt, von den Sprachsignal-Spektren einer vorbestimmen Anzahl von aufeinanderfolgenden Frames; und
   Vektor-Quantisieren des Spektrumsänderungsvektors unter Verwendung eines Codebuchs (70), das in Abhängigkeit vom Leistungsänderungsvektor-Quantisierungscode ausgewählt wurde, um einen Spektrumsänderungsvektor-Quantisierungscode (TSP-VQ) zu erzeugen,

   und dadurch gekennzeichnet, daß
   die Ausgabe eines Signals, das ein Phonem darstellt, auf der weiteren Basis des Spektrumsänderungsvektor-Quantisierungscode ausgeführt wird.

2. Phonem-Unterscheidungsvorrichtung, die folgendes umfaßt:

   eine Vorrichtung (10) zum Analysieren von Frames eines Eingangs-Sprachsignals, um Vektoren zu erzeugen, die das Spektrum und die Leistung des Sprachsignals während eines jeden Frames darstellen;
   eine Vorrichtung (20) zum Erzeugen eines Leistungsänderungsvektors (PCP), der eine Änderung in der Sprachsignal-Leistung mit der Zeit darstellt, aus den Sprachsignal-Leistungen einer vorbestimmten Anzahl von aufeinanderfolgenden Frames;
   eine Vorrichtung (30) zur Vektor-Quantisierung des Leistungsänderungsvektors unter Verwendung eines empirisch bestimmten Leistungsänderungsvektor-Codebuchs (40), um einen Leistungsänderungsvektor-Quantisierungscode (PCP-VQ) zu erzeugen; und
   Vorrichtungen (80, 90, 100) für die Ausgabe eines Signals, das ein Phonem darstellt, auf der Basis des Leistungsänderungsvektor-Quantisierungscodes,

   gekennzeichnet durch

   eine Vorrichtung (50) zur Erzeugung eines Spektrumsänderungsvektors, der eine Änderung im Sprachsignal-Spektrum mit der Zeit darstellt, aus den Sprachsignal-Spektren einer vorbestimmten Anzahl von aufeinanderfolgenden Frames; und
   eine Vorrichtung (60) zur Vektor-Quantisierung des Spektrumsänderungsvektors unter Verwendung eines Codebuchs (70), das in Abhängigkeit vom Leistungsänderungsvektor-Quantisierungscode ausgewählt wurde, um einen Spektrumsänderungs-Quantisierungscode (TSP-VQ) zu erzeugen,

   und dadurch gekennzeichnet, daß
   die Vorrichtung für die Ausgabe eines Signals, das ein Phonem darstellt, weiterhin empfänglich ist auf den Spektrumsänderungsvektor-Quantisierungscode.

3. Phonem-Unterscheidungsverfahren, das folgende Schritte aufweist:

Analysieren der Frames eines Eingangs-Sprachsignals, um Vektoren zu erzeugen, die das Spektrum und die Leistung des Sprachsignals während eines jeden Frames darstellen;

Erzeugen eines Leistungsänderungsvektors (PCP), der eine Änderung in der Sprachsignal-Leistung mit der Zeit darstellt, aus den Sprachsignal-Leistungen einer vorbestimmten Anzahl von aufeinanderfolgenden Frames;

Vektor-Quantisieren des Leistungsänderungsvektors unter Verwendung eines empirisch bestimmten Leistungsänderungsvektor-Codebuchs, um einen Leistungsänderungsvektor-Quantisierungscode (PCP-VQ) zu erzeugen; und

Ausgeben eines Signals, das ein Phonem darstellt, auf der Basis des Leistungsänderungsvektor-Quantisierungscodes;

gekennzeichnet durch folgenden Schritt:

Vektor-Quantisieren des Spektrumvektors für ein Frame unter Verwendung einer Vielzahl von Spektrumsvektor-Codebüchern (160), die in Abhängigkeit vom Leistungsänderungsvektor-Quantisierungscode ausgewählt wurden, um eine Vielzahl von Spektrumsvektor-Quantisierungscodes und eine Vielzahl von Quantisierungs-Fehlerwerten zu erzeugen,

und dadurch, daß das Signal, das ein Phonem darstellt, auf der weiteren Basis des Spektrumsvektor-Quantisierungscode ausgegeben wird, der gemäß einem optimalen Codebuch erzeugt wird,

wobei das optimale Codebuch das Spektrum-Codebuch ist, für das die Summe der Quantisierungs-Fehlerwerte über die Zeit am geringsten ist.

4. Phonem-Unterscheidungsvorrichtung, die folgendes aufweist:

eine Vorrichtung (110) zum Analysieren von Frames eines Eingangs-Sprachsignals, um Vektoren zu erzeugen, die das Spektrum und die Leistung des Sprachsignals während eines jeden Frames darstellen;

eine Vorrichtung (120) zum Erzeugen eines Leistungsänderungsvektors (PCP), der eine Änderung in der Sprachsignal-Leistung mit der Zeit darstellt, aus den Sprachsignal-Leistungen einer vorbestimmten Anzahl von aufeinanderfolgenden Frames;

eine Vorrichtung (130) zum Vektor-Quantisieren des Leistungsänderungsvektors unter Verwendung eines empirisch bestimmten Leistungsänderungsvektor-Codebuchs (140), um einen Leistungsänderungsvektor-Quantisierungscode (PCP-VQ) zu erzeugen; und

Vorrichtungen (180, 190, 200) für die Ausgabe eines Signals, das ein Phonem darstellt, auf der Basis des Leistungsänderungsvektor-Quantisierungscodes;

gekennzeichnet durch

eine Vorrichtung (150) zum Vektor-Quantisieren des Spektrumsvektors für ein Frame unter Verwendung einer Vielzahl von Spektrumsvektor-Codebüchern (160), die in Abhängigkeit vom Leistungsänderungsvektor-Quantisierungscode ausgewählt wurden, um eine Vielzahl von Spektrumsvektor-Quantisierungscodes und eine Vielzahl von Quantisierungs-Fehlerwerten zu erzeugen; und

Vorrichtungen (180, 190, 200) für die Ausgabe eines Signals, das ein Phonem darstellt, auf der weiteren Basis des Spektrumsvektor-Quantisierungscodes, der gemäß einem optimalen Codebuch erzeugt wurde,

wobei das optimale Codebuch das Spektrumsvektor-Codebuch ist, das durch eine Vorrichtung (170) identifiziert wird, um zu ermitteln, für welches Spektrumsvektor-Codebuch die Summe der Quantisierungs-Fehlerwerte über die Zeit am geringsten ist.

## Revendications

1. Procédé de discrimination de phonèmes comprenant les étapes consistant :

à analyser des trames d'un signal vocal d'entrée pour produire des vecteurs représentant le spectre et la puissance du signal vocal pendant chaque trame ;

à générer un vecteur de variation de puissance (PCP) représentant une variation de la puissance du signal vocal avec le temps, à partir des puissances de signal vocal d'un nombre prédéterminé de trames successives ;

à quantifier vectoriellement le vecteur de variation de puissance en utilisant un livre de code de vecteur de variation de puissance déterminé empiriquement pour produire un code de quantification de vecteur de variation de puissance (PCP-VQ) ; et

à fournir en sortie un signal représentant un phonème sur la base du code de quantification de vecteur de variation de puissance,

    caractérisé par les étapes consistant :

à générer un vecteur de variation de spectre (TSP) représentant une variation du spectre du signal vocal avec le temps, à partir de spectres de signal vocal d'un nombre prédéterminé de trames successives ; et
à quantifier vectoriellement le vecteur de variation de spectre en utilisant un livre de code (70) sélectionné en fonction du code de quantification du vecteur de variation de puissance, afin de produire un code de quantification de vecteur de variation de spectre (TSP-VQ),

    et en ce que

la fourniture en sortie d'un signal représentant un phonème est effectuée sur la base supplémentaire du code de quantification du vecteur de variation de spectre.

2.    Appareil de discrimination de phonèmes comprenant :

des moyens (10) pour analyser des trames d'un signal vocal d'entrée afin de produire des vecteurs représentant le spectre et la puissance du signal vocal pendant chaque trame ;
des moyens (20) pour générer un vecteur de variation de puissance (PCP) représentant une variation de la puissance du signal vocal avec le temps, à partir de puissances de signal vocal d'un nombre prédéterminé de trames successives ;
des moyens (30) pour quantifier vectoriellement le vecteur de variation de puissance en utilisant un livre de code (40) de vecteur de variation de puissance déterminé empiriquement afin de produire un code de quantification de vecteur de variation de puissance (PCP-VQ) ; et
des moyens (80,90,100) pour fournir en sortie un signal représentant un phonème sur la base du code de quantification de vecteur de variation de puissance,

    caractérisé par

des moyens (50) pour générer un vecteur de variation de spectre représentant une variation du spectre de signal vocal avec le temps, à partir de spectres de signal vocal d'un nombre prédéterminé de trames successives ; et
des moyens (60) pour quantifier vectoriellement le vecteur de variation de spectre, en utilisant un livre de code (70) sélectionné en fonction du code de quantification de vecteur de variation de puissance, afin de produire un code de quantification de vecteur de variation de spectre (TSP-VQ),

    et en ce que

les moyens pour fournir en sortie un signal représentant un phonème sont en outre sensibles au code de quantification de vecteur de variation de spectre.

3.    Procédé de discrimination de phonèmes comprenant les étapes consistant :

à analyser des trames d'un signal vocal d'entrée pour produire des vecteurs représentant le spectre et la puissance du signal vocal pendant chaque trame ;
à générer un vecteur de variation de puissance (PCP), représentant une variation de la puissance du signal vocal avec le temps, à partir des puissances de signal vocal d'un nombre prédéterminé de trames successives ;
à quantifier vectoriellement le vecteur de variation de puissance en utilisant un livre de code de vecteur de variation de puissance déterminé empiriquement pour produire un code de quantification de vecteur de variation de puissance (PCP-VQ) ; et
à fournir en sortie un signal représentant un phonème sur la base du code de quantification de vecteur de variation de puissance,

    caractérisé par l'étape consistant :

à quantifier vectoriellement le vecteur de variation de spectre pour une trame en utilisant un ensemble de livres de code (160) de vecteur de spectre sélectionné en fonction du code de quantification de vecteur de variation de puissance, afin de produire un ensemble de codes de quantification de vecteur de spectre et un ensemble de valeurs d'erreurs de quantification,

et en ce que

le signal représentant un phonème est fourni en sortie sur la base supplémentaire du code de quantification de vecteur de spectre produit conformément à un livre de code optimal,

le livre de code optimal étant le livre de code de vecteur de spectre pour lequel la somme au cours du temps des valeurs d'erreurs de quantification est la plus faible.

4. Appareil de discrimination de phonèmes comprenant :

des moyens (110) pour analyser des trames d'un signal vocal d'entrée afin de produire des vecteurs représentant le spectre et la puissance du signal vocal pendant chaque trame ;

des moyens (120) pour générer un vecteur de variation de puissance (PCP) représentant une variation de la puissance du signal vocal avec le temps, à partir de puissances de signal vocal d'un nombre prédéterminé de trames successives ;

des moyens (130) pour quantifier vectoriellement le vecteur de variation de puissance en utilisant un livre de code (140) de vecteur de variation de puissance déterminé empiriquement afin de produire un code de quantification de vecteur de variation de puissance (PCP-VQ) ; et

des moyens (180,190,200) pour fournir en sortie un signal représentant un phonème sur la base du code de quantification de vecteur de variation de puissance ;

caractérisé par

des moyens (150) pour quantifier vectoriellement le vecteur de spectre pour une trame en utilisant un ensemble de livres de code (160) de vecteurs de spectre sélectionnés en fonction du code de quantification de vecteur de variation de puissance, afin de produire un ensemble de codes de quantification de vecteur de spectre et un ensemble de valeurs d'erreurs de quantification ; et

des moyens (180,190,200) pour fournir en sortie un signal représentant un phonème sur la base supplémentaire du code de quantification de vecteur de variation de spectre produit conformément à un livre de code optimal,

le livre de code optimal étant le livre de code de vecteur de spectre identifié par des moyens (170) pour déterminer le livre de code de vecteur de spectre pour lequel la somme au cours du temps des valeurs d'erreurs de quantification est la plus faible.

# Fig. 1

EP 0 475 759 B1

Fig. 2

# Fig. 3

| 20 | 30 | 30 | 30 | 15 |
|----|----|----|----|----|

# Fig. 4

INTENSITY

TIME

FREQUENCY

# F I g. 5

| |
|---|
| 0 0 0 0 1 0 0 0 1 1 0 0 0 0 |
| 0 0 0 0 1 0 0 1 1 0 0 0 0 0 |
| ⋮ |
| 0 0 0 0 0 0 0 0 0 0 0 0 0 0 |

# F I g. 6

| POWER CODE (m) | POWER PATTERN $(Y^m)$ | | | | |
|---|---|---|---|---|---|
| 1 | 30 | 30 | 30 | 30 | 30 |
| 2 | 15 | 30 | 30 | 30 | 20 |
| 3 | 10 | 20 | 30 | 40 | 40 |

# F l g. 7

| POWER CODE | TSP | |
|---|---|---|
| 1 | 0 0 0 1 1 0 0 0 1 0 | R(1) |
| | 0 0 0 1 1 0 0 1 0 0 | |
| | ⋮ | |
| | 0 0 0 0 0 0 0 0 0 0 | |
| 2 | 0 0 1 0 0 1 1 1 0 0 | R(2) |
| | 0 0 1 0 0 1 1 0 0 0 | |
| | ⋮ | |
| | 0 0 1 0 0 1 0 0 0 0 | |
| ⋮ | ⋮ | |
| M | 0 0 1 1 0 0 1 1 0 0 | R(M) |
| | 0 0 1 1 0 0 1 1 0 0 | |
| | ⋮ | |
| | 0 1 0 0 1 1 0 0 0 0 | |

# FIg. 8

| POWER CODE($C_i$) | TSP-VQ CODE($Z_i$) | PHONEME CODE($L_i$) |
|---|---|---|
| | 1 | a |
| 1 | 2 | i |
| | 3 | u |
| | 1 | u |
| 2 | 2 | u |
| | 3 | e |
| | 4 | o |

# Fig. 9

EP 0 475 759 B1

EP 0 475 759 B1

# Fig. 10

INTENSITY

35

30

20

10

5

7   5

FREQUENCY

# Fig. 11

| 5 | 10 | ... | 35 | ... | 20 | ... | 30 | ... | 7 | 5 |
|---|----|-----|----|-----|----|-----|----|-----|---|---|

# F l g. 12

EP 0 475 759 B1

# F l g. 13

| OPTIMAL CODEBOOK(qm) | POWER CODE(Ci) | SPECTRUM VQ CODE(Zi) | PHONEME CODE(Li) |
|---|---|---|---|
| 1 | 1 | 1 | a |
| | | 2 | i |
| | | 3 | u |
| | 2 | 1 | u |
| | | 2 | u |
| | | 3 | e |
| 2 | 1 | 1 | a |
| | | 2 | i |
| | 2 | 1 | u |
| | | 2 | e |
| | | 3 | o |